**Europäisches Patentamt**

**European Patent Office**

**Office européen des brevets**

(19)

(11) Veröffentlichungsnummer : **0 300 991 B1**

(12) **EUROPÄISCHE PATENTSCHRIFT**

(45) Veröffentlichungstag der Patentschrift :
04.09.91 Patentblatt 91/36

(51) Int. Cl.⁵ : **H01M 10/14, H01M 2/18**

(21) Anmeldenummer : **88890177.4**

(22) Anmeldetag : **06.07.88**

(54) Vorrichtung zum Eintaschen von positiven oder negativen Platten für Akkumulatoren.

(30) Priorität : 20.07.87 AT 1830/87

(43) Veröffentlichungstag der Anmeldung :
25.01.89 Patentblatt 89/04

(45) Bekanntmachung des Hinweises auf die
Patenterteilung :
04.09.91 Patentblatt 91/36

(84) Benannte Vertragsstaaten :
AT BE CH DE ES FR GB GR IT LI LU NL SE

(56) Entgegenhaltungen :
EP-B- 0 029 017
DE-A- 2 715 713

(73) Patentinhaber : ELBAK Batteriewerke
Gesellschaft m.b.H.
Puntigamer Strasse 127
A-8055 Graz-Puntigam Steiermark (AT)

(72) Erfinder : Schwetz, Anton
Nörning 72
A-8273 Ebersdorf (Stmk) (AT)
Erfinder : Puhm, Helmut
Dr. Robert Grafstrasse 10/40
A-8010 Graz (Stmk) (AT)
Erfinder : Kirstein, Wilhelm H.
Paradisgasse 55
A-1190 Wien (AT)

(74) Vertreter : Beer, Otto, Dipl.-Ing. et al
Patentanwälte Dipl.-Ing. Otto Beer Dipl.-Ing.
Manfred Beer Lindengasse 8
A-1070 Wien (AT)

## Beschreibung

Die Erfindung betrifft eine Vorrichtung zum Eintaschen von Platten für Akkumulatoren in Separatoren mit einer Vorrichtung zum Abziehen von Separatorband von einer Vorratsspule, mit einem lotrecht verlaufenden geraden Kanal, in dem das von der Vorratsspule abgezogene Separatorband eingeführt wird, mit einer Vorrichtung zum Ablängen von Separatorbandstücken vom Separatorband und mit einem im Kanal quer zu seiner Längserstreckung verlaufenden Schlitz, durch den eine Platte für einen Akkumulator, die einzutaschen ist, unter Falten und Herausschieben des Separatorbandstücks durchschiebbar ist.

Eine derartige Vorrichtung ist aus der EP-B-29017 bekannt.

Der Erfindung liegt die Aufgabe zugrunde, die aus der EP-B-29017 bekannte Vorrichtung im Sinne einer Erhöhung ihrer Leistungsfähigkeit und einer Verbesserung der Betriebssicherheit weiter zu verbessern.

Gelöst wird diese Aufgabe durch die im Anspruch 1 genannten Merkmale, wobei die von diesem Anspruch abhängigen Unteransprüche weitere Verbesserungen und vorteilhafte Ausführungsformen der erfindungsgemäßen Vorrichtung zum Gegenstand haben.

Die Merkmale der vorgenannten Ansprüche können bei einer gattungsgemäßen Vorrichtung einzeln oder kumulativ verwirklicht sein, wobei auch Teilkombinationen der in den vorgenannten Ansprüchen gekennzeichneten Ausführungsformen möglich sind.

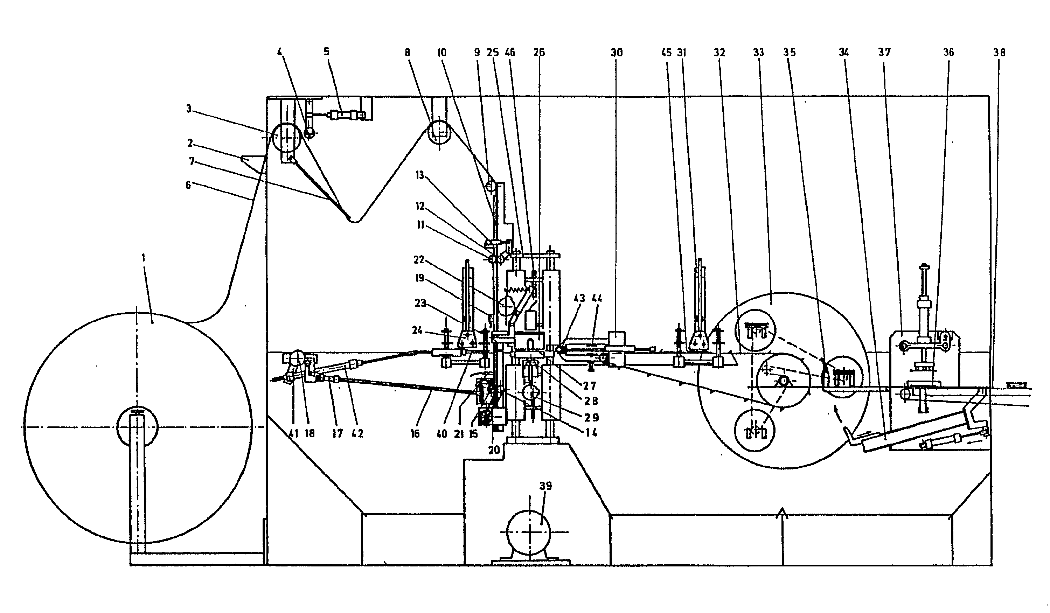

Weitere Einzelheiten und Merkmale der Erfindung ergeben sich aus der nachstehenden Beschreibung einer in der Zeichnung teils schematisch, in Seitenansicht gezeigten Vorrichtung zum Eintaschen und Abstapeln von positiven oder negativen Platten für Akkumulatoren.

Ein Separatorband 6, in das positive oder negative Akkumulatorenplatten eingetascht werden sollen, wird von einer Vorratsspule 1, die im Maschinengestell drehbar gelagert ist, abgezogen. Hiezu ist eine als Förderrolle 3 dienende Umlenkrolle vorgesehen, der eine Andrückwalze 4 zugeordnet ist. Die Andrückwalze 4 sichert, wenn sie über das Separatorband 6 gegen die Förderrolle 3 gedrückt wird, den Abzug von Separatorband 6 von dessen Vorratsspule 1. Um die Andrückwalze 4 gegen die Förderrolle 3 drücken zu können, ist diese über Lenker im Maschinengestell um eine horizontale Achse verschwenkbar gelagert, wobei die Schwenkbewegung durch einen Druckmittelzylinder 5 bewirkt wird.

Nach der Förderrolle 3 bildet das Separatorband 6 eine nach unten hängende Schlaufe, die zu einer Umlenkrolle 8, die im Maschinengestell um eine ortsfeste Achse drehbar gelagert ist, führt. Unter der Förderrolle 3 ist ein beispielsweise bügelartig ausgebildeter Fühlhebel 7 im Maschinengestell verschwenkbar gelagert, dessen Schwenklage durch die Größe der Schlaufe des Separatorbandes 6 bestimmt wird. Wird der Bügel bei Verkleinerung der Schlaufe des Separatorbandes 6 über ein vorgegebenes Maß nach oben verschwenkt, dann wird von einer Folgesteuerung ausgelöst, die Andrückwalze 4 vom Druckmittelzylinder 5 gegen das über die Förderrolle 3 laufende Separatorband 6 gedrückt und dieses von der Vorratsspule 1 abgezogen.

Vor der Förderrolle 3 sind noch zwei am Maschinengestell befestigte Bleche 2 vorgesehen, welche die seitliche Führung des Separatorbandes 6 bewirken.

Von der Umlenkrolle 8 gelangt das Separatorband 6 über eine weitere Umlenkrolle 9 in einen maschinengestellfest montierten Kanal 10, der sich vertikal von oben nach unten erstreckt. Am unteren Ende des Kanals ist ein Anschlag 20 vorgesehen, der zu einem noch zu erläuternden Zweck aus seiner den Kanal 10 unten verschließenden Lage ausgeschwenkt werden kann.

Der Kanal 10 weist ein oberes Rollenpaar, bestehend aus den Rollen 11 und 12, sowie ein unteres Rollenpaar, bestehend aus den Rollen 14 und 15 auf. Dabei sind die Rollen 11 und 14 um ortsfeste Achsen drehbar gelagert und mit Antrieben ausgestattet. Die frei drehbaren Rollen 11 und 15 sind so gelagert, daß ihr Abstand von den ihnen zugeordneten, angetriebenen Rollen 11 bzw. 14 vergrößert bzw. verkleinert werden kann. Hiezu ist der oberen Rolle 12 ein Pneumatikzylinder 13 zugeordnet, der die Rolle 12 über das Separatorband 6 gegen die angetriebene Rolle 11 drückt oder von dieser abhebt.

Die der angetriebenen Rolle 14 zugeordnete, frei drehbare Rolle 15 ist im Maschinengestell an einem Winkelhebel gelagert, der durch ein Gestänge 16 zum Abheben der Rolle 15 vom Separatorband bzw. der Rolle 14 verschwenkbar ist. Das Verschwenken des die Rolle 15 tragenden Winkelhebels erfolgt durch Bewegungen des Gestänges 16, das von einer Nockenscheibe 18, die um eine im Maschinengestell angeordnete, horizontale Achse drehbar gelagert ist, bewegt wird.

Im unteren Bereich des Kanals 10 ist noch ein die Anwesenheit von Separatorband 6 erfassender Signalgeber 21 vorgesehen. Wenn das vordere Ende des Separatorbandes 6 den Signalgeber 21 erreicht, wird die frei drehbare Rolle 12 durch Betätigen des Pneumatikzylinders 13 von der ständig angetriebenen Rolle 11 abgehoben, so daß das Separatorband 6 nun ausschließlich durch die ständig angetriebene Rolle 14 weitergefördert wird. Der Anpreßdruck der der Rolle 14 zugeordneten, frei drehbaren Rolle 15 ist so gering gewählt, daß das Separatorband 6 beim Erreichen des Anschlages 20 keine Wellen oder Falten bildet, sondern gerade im Kanal 10 stehen bleibt. Aus diesem Grund ist auch der Transportwiderstand der Umlenkrollen 8 und 9 möglichst klein gehalten, sonst würden bei größerem Anpreßdruck der Förderrollen 14, 15 Längenunterschiede der vom Separatorband 6 abgelängten Separatorbandstücke auftreten.

Sobald das vordere Ende des im Kanal 10 befindlichen Separatorbandes 6 den Anschlag 20 erreicht hat, wird durch eine Nokkenscheibe 22 eine Schere 23 betätigt und längt vom Separatorband 6 ein Separatorbandstück ab.

Wie aus der Zeichnung ersichtlich, ist neben dem Kanal 10 eine Vorrichtung zum Auflegen 24 einer Akkumulatorenplatte (positive oder negative Platte) auf ein in der Vorrichtung in einer Horizontalebene vor- und zurückschiebbares Faltblech 40 vorgesehen. Die als Plattenleger dienende Vorrichtung 24 kann ein Magazin für plattenförmige Gegenstände sein, wie dies aus den AT-PSen 241565, 329124, 352198 und insbesondere der EP-A-141806 bekannt ist.

Beim Vorschieben des Faltbleches 40 mit einer darauf liegenden Akkumulatorplatte wird das zu vor vom Separatorband 6 abgelängte Separatorbandstück um die Platte herum geleget und in seiner Längsmitte gefaltet. Bevor das Faltblech 40 das zu faltende Separatorbandstück berührt, wird die nur leicht gegen die Rolle 14 gedrückte Rolle 15 durch ihr Gestänge 16 von der Nockenscheibe 18 ausgeschwenkt, um den Faltvorgang nicht zu behindern.

Von den Herstellern von Separatorband 6 werden fehlerhafte Stellen in diesem üblicherweise durch auf dem Separatorband 6 angebrachte Farbmarken gekennzeichnet. Um derartige fehlerhafte Separatorbandbereiche nicht zum Eintaschen von Akkumulatorenplatten zu verwenden, ist dem Kanal 10 ein Sensor 19 für derartige Farbmarken zugeordnet. Erfaßt der Sensor 19 eine derartige Farbmarke, dann wird der Anschlag 20 am unteren Ende des Kanals 10 weggeschwenkt, wobei aber die Rolle 15 nicht wegschwenkt. Dies wird erreicht, indem gleichzeitig ein in das Gestänge 16 eingebauter Pneumatikzylinder 17 den Hub der Nockenscheibe 18 ausgleicht, so daß das schadhafte oder fehlerhafte Separatorstück, das zuvor vom übrigen Separatorband 6 durch die Schneidvorrichtung 23 abgeschnitten worden ist, aus dem Kanal 10 herausgefördert wird. Um den Hub der Nockenscheibe 18 wirkungslos zu machen, wird der Pneumatikzylinder 17 im gegebenen Zeitpunkt so mit Druckluft beaufschlagt, daß sich das Gestänge 16 um ein entsprechendes Stück verlängert, so daß die am kanalseitigen Ende des Gestänges 16 vorgesehene Betätigungsrolle den Winkelhebel, der die frei drehbare Rolle 15 trägt, nicht verschwenkt.

Um eine in diesem Fall nicht benötigte und das Herausfördern des fehlerhaften Separatorbandstückes behindernde Betätigung des Faltbleches 40 zu verhindern, d.h. zu verhindern, daß sich das Faltblech 40 durch den quer zur Längserstreckung des Kanals 10 ausgerichteten Schlitz bewegt, wird ein in der Pleuelstange, die das Faltblech 40 mit dem Kurbeltrieb 41 verbindet, vorgesehener Pneumatikzylinder 42 so mit Druckluft beaufschlagt, daß er den Hub des Kurbeltriebes 41 absorbiert. Der Pneumatikzylinder 42 ist aus Festigkeitsgründen und um eine aufwendige Teleskopführung zu ersparen, so ausgebildet, daß als Pleuelstange ein Pneumatikzylinder 42 mit durchgehender Kolbenstange verwendet wird.

Zur Einstellung der richtigen Länge der vom Separatorband 6 abzulängenden Separatorbandstücke ist die Schneidvorrichtung 23 und der Anschlag 20 durch eine Schnittlängeneinstellvorrichtung 25 auf die jeweils gewünschte bzw. benötigte Schnittlänge einstellbar. Hiezu sind die auf vertikalen Führungsstangen verschiebbaren Träger für die Schneidvorrichtung 23 und den Anschlag 20 mit Hilfe einer Gewindespindel 46, die mit Links- und Rechtsgewinde ausgestattet ist, verstellbar.

Die wie oben beschrieben, in das gefaltete Separatorbandstück eingeschlagene Akkumulatorplatte wird auf der der Vorrichtung zum Auflegen der Platten 24 gegenüberliegenden Seite des Kanals 10 von einer Vorrichtung zum Herausziehen 30, u.zw. von den an dieser vorgesehenen Backen 43, erfaßt und in den Bereich der Schweißstation 26 gezogen.

Zur Ausführung der Schweißarbeit (in der Regel eine Ultraschallverschweißung der aufeinanderliegenden Längsränder des gefalteten Separatorbandstückes) werden die beiden Ambosse 27 der Schweißvorrichtung 26 von unten her durch eine Nocke 29 bis zu den oberhalb der eingetaschten Akkumulatorplatte angeordneten Schweißhörnern der Schweißvorrichtung 26 angehoben. Der Anpreßdruck der Ambosse 27 kann durch den Resthub der Nocke 29 und/oder durch den in einer pneumatischen Feder 28 herrschenden Druck eingestellt werden. Die pneumatische Feder 28 überträgt den Hub der Nocke 29 auf die Ambosse 27 der Schweißvorrichtung 26.

Nachdem die beiden Längsränder des um die Akkumulatorplatte herumgefalteten Separatorbandstückes miteinander verschweißt worden sind, wird die derart eingetaschte Akkumulatorenplatte von der Ausziehvorrichtung 30, und zwar von ihren Klemmbacken 44 erfaßt und aus dem Bereich der Schweißvorrichtung herausgezogen. Gleichzeitig wird von den vorderen Klemmbacken 43 der Ausziehvorrichtung 30 eine weitere Akkumulatorplatte mit herumgefaltetem Separatorbandstück in den Bereich der Schweißvorrichtung 26 gezogen.

Die Klemmbacken 44 der Ausziehvorrichtung 30 ziehen die eingetaschte Akkumulatorenplatte bis auf zwei Gleitschienen. Von hier aus wird die eingetaschte Akkumulatorplatte beim nächsten Hub der Ausziehvorrichtung 30 durch an der Ausziehvorrichtung 30 befestigte und sich mit dieser hin- und herbewegende Haken auf einen Endlosförderer, z.B. eine Plattentransportkette 32 mit nach außen weisenden Mitnehmern geschoben. Der Förderer 32 kann als Rollenkette, vorzugsweise in Form von zwei nebeneinanderliegenden Rollenketten, ausgebildet sein.

Dem oberen Trum des Förderers 32 ist noch eine Vorrichtung zum Auflegen der Plattenlegerstation 31 zugeordnet, welche die gleiche Bauart haben kann wie die Vorrichtung zum Auflegen der Platten 24, und mit der Mittelplatten —d.h. Platten der den eingetaschten Akkumulatorplatten entgegengesetzten Polarität— auf Ablageleisten 45, die knapp oberhalb des oberen, sich horizontal bewegenden Trums des Förderers 32 befinden, abgelegt werden. Wenn nun eine eingetaschte Akkumulatorplatte an den Mitnehmern des Förderers 32 anliegend, unter den Ablageleisten 45 hindurchbewegt wird, nehmen die Mitnehmer die auf der Ablageleiste 45 liegende Akkumulatorplatte mit, so daß diese nach den Ablageleisten 45 auf der eingetaschten Akkumulatorplatte aufliegend vom Förderer 32 weiterbefördert wird. Hiezu haben die Mitnehmer am Förderer 32 eine Höhe, die hinreicht, daß sie die auf die Ablageleisten 45 abgelegte Platte von diesen abstreifen.

Dem abgabeseitigen Ende des Förderers 32 ist ein Drehscheibenrad 33 zugeordnet, das als Vorrichtung zum Übereinanderstapeln der vom Förderer 32 herangeförderten Akkumulatorplatten dient. Das Drehscheibenrad 33 kann eine Konstrukion besitzen, wie sie aus der AT-PS 355 500 bekannt ist. Vom Drehscheibenrad 33 werden die auf dem Förderer 32 herangeförderten Akkumulatorplatten paarweise —d.h. je ein Paar bestehend aus einer eingetaschten und einer nicht eingetaschten Platte— auf einen Sammelrost 35 umgesetzt.

Sobald am Sammelrost 35 ein Stapel mit der gewünschten Anzahl von Akkumulatorplatten gebildet worden ist, wird der Plattenstapel ("Block") durch eine im Maschinengestell nach oben verschwenkbar gelagerte Blockausziehvorrichtung 34 vom Sammelrost 35 auf quer verstellbare Leisten 36, die sich in diesem Zeitpunkt in ihrer oberhalb eines Auslauftransportbandes befindlichen Stellung befinden, geschoben. Bevor dies geschieht, wurde bei noch nicht vorgeschobenen Leisten 36, d.h. Leisten, die sich seitlich des Auslauftransportbandes 38 (z.B. ein Rollenkettenpaar) befinden, von einem Endplattenleger 37 eine Endplatte auf das Auslauftransportband 38 abgelegt. Sobald von der Blockausziehvorrichtung 34 ein Stapel Akkumulatorplatten auf die Leisten 36 gelegt worden ist, werden die Leisten 36 seitlich zurückgezogen und der Stapel fällt auf die am Transportband 38 liegende Endplatte. Hierauf bewegt sich das Transportband 38 um einen Schritt weiter. Nachdem sich das Transportband 38 um einen Takt weiter bewegt hat, wird vom Endplattenleger 37 eine weitere Endplatte auf das Transportband 38 abgelegt und die Leisten 36 wieder über das Transportband 38 und die darauf befindliche Endplatte eingeschwenkt und der nächste Stapel von Akkumulatorplatten kann von der Blockausziehvorrichtung 34 vom Sammelrost 35 weg auf die Leisten 36 gezogen werden.

Es ist noch darauf hinzuweisen, daß der Antrieb der erfindungsgemäßen Vorrichtung wegen der richtigen Synchronisation der Bewegungen der verschiedenen Teile derselben über einen einzigen Antriebsmotor 39 erfolgt.

Durch die Verwendung dieses Antriebes konnte die Taktzahl der erfindungsgemäßen Vorrichtung gegenüber der aus der EP-B-29017 bekannten Vorrichtung um etwa 30% gesteigert werden.

Sämtliche "Förderrollen" oder "Walzen" der erfindungsgemäßen Vorrichtung können durchgehende Walzen sein oder aus zwei oder mehreren Rollen bestehen.

**Patentansprüche**

1. Vorrichtung zum Eintaschen von positiven oder negativen Platten für Akkumulatoren in Separatoren mit einer Vorrichtung zum Abziehen von Separatorband von einer Vorratsspule (1), mit einem lotrecht verlaufenden geraden Kanal (10), in den das von der Vorratsspule (1) abgezogene Separatorband (6) eingeführt wird, mit einer Vorrichtung (23) zum Ablängen von Separatorbandstücken vom Separatorband (6) und mit einem im Kanal (10) quer zu seiner Längserstreckung verlaufenden Schlitz, durch den eine Platte für einen Akkumulator, die einzutaschen ist, unter Falten und Herausschieben des Separatorbandstückes durchschiebbar ist, dadurch gekennzeichnet, daß der vertikale Kanal (10) für das Separatorband (6) an seinem unteren Ende durch einen Anschlag (20) verschlossen ist, daß im unteren Bereich des Kanals (10), ein die Anwesenheit von Separatorband (6) im Kanal (10) erfassender Signalgeber (21) vorgesehen ist, daß im Bereich des vertikal ausgerichteten Kanals (10) an das im Kanal (10) aufgenommene Separatorbands (6) anlegbare Rollen (11, 12 ; 14, 15) zum Weiterfördern von Separatorband (6) im Kanal (10) vorgesehen sind und daß die Vorrichtung (23) zum Ablängen von Separatorbandstücken vom Separatorband (6) betätigt wird, sobald das vordere Ende des im Kanal (10) befindlichen Separatorbandes (6) den Anschlag (20) am unteren Ende des Kanals (10) erreicht hat.

2. Vorrichtung nach Anspruch 1, dadurch gekennzeichnet, daß die Vorrichtung (23) zum Ablängen von Separatorbandstücken vom Separatorband (6) und der Anschlag (20) am unteren Ende des Kanals (10) durch eine Schnittlängeneinstellvorrichtung (25) zum Einstellen der Länge des vom Separatorband (6) abzulängenden Separatorbandstückes in Richtung der Längserstreckung des Kanals (10) verstellbar sind.

3. Vorrichtung nach Anspruch 1 oder 2, dadurch gekennzeichnet, daß die im Bereich des vertikal ausgerichteten Kanals (10) an das im Kanal (10) aufgenommene Separatorband (6) anlegbaren Rollen (11, 12 ; 14, 15) zum Weiterfördern von Separatorband (6) im Kanal (10) paarweise vorgesehen und von beiden Seiten her an das im Kanal (10) aufgenommene Separatorband (6) anlegbar sind.

4. Vorrichtung nach Anspruch 3, dadurch gekennzeichnet, daß von jedem Rollenpaar (11, 12 ; 14, 15) eine Rolle (11, 14) angetrieben ist und die zweite Rolle (12, 15) vorzugsweise nicht angetrieben und frei drehbar und außer Eingriff mit dem Separatorband (6) im Kanal (10) bewegbar ist.

5. Vorrichtung nach einem der Ansprüche 1 bis 4, dadurch gekennzeichnet, daß der am unteren Ende des vertikalen Kanals (10) für das Separatorband (6) vorgesehene Anschlag (20) aus dem Bereich des Kanals (10) herausbewegbar, insbesondere ausschwenkbar ist, und daß im Bereich der dem Kanal (10) zugeordneten Schneidvorrichtung (23) vorzugsweise oberhalb derselben ein Sensor (19) zum Erfassen einer auf dem Separatorband (6) angebrachten, eine Fehlstelle in diesem anzeigenden Farbmarke zugeordnet ist.

6. Vorrichtung nach einem der Ansprüche 1 bis 5, dadurch gekennzeichnet, daß die Schneidvorrichtung (23) im Maschinengestell verschwenkbar gelagert und durch eine Nockenscheibe (22) zum Ausführen eines Schnitthubes verschwenkbar ist und daß die Schneidvorrichtung (23) durch eine Zugfeder in ihre Ruhestellung hin belastet ist.

7. Vorrichtung nach einem der Ansprüche 1 bis 6, dadurch gekennzeichnet, daß die Vorrichtung zum Abziehen vom Separatorband (6) von der Vorratsspule (1) eine Förderrolle (3) aufweist, gegen die eine Andrückwalze (4) anlegbar ist, wobei das Separatorband (6) zwischen der Förderrolle (3) und der Andrückwalze (4) hindurchgeführt ist, und daß das Anlegen der Andrückwalze (4) in Abhängigkeit von der Größe einer nach der Förderrolle (3) gebildeten Schlaufe aus Separatorbad (6) gesteuert ist.

8. Vorrichtung nach Anspruch 7, dadurch gekennzeichnet, daß zur Ermittlung der Größe der Schlaufe, die zwischen der Förderrolle (3) und einer weiteren, vorzugsweise am Beginn des Kanals (10) angeordneten Umlenkrolle (8) für das Separatorband (6), ein um eine gestellfeste Achse verschwenkbarer Fühlhebel (7), der von innen an der Schlaufe anliegt, vorgesehen ist.

9. Vorrichtung nach Anspruch 8, dadurch gekennzeichnet, daß dem Fühlhebel (7) ein seine Lage erfassender Meßumformer, beispielsweise ein induktiver Schalter, zugeordnet ist.

10. Vorrichtung nach Anspruch 9, dadurch gekennzeichnet, daß der Meßumformer einen Druckmittelzylinder (5), der auf die Andrückwalze (4) insbesondere ein diese tragendes Gestell, einwirkt, derart steuert, daß die Andrückwalze (4) vom über die Umlenkwalze (8) laufenden Separatorband (6) abgehoben wird, wenn die Größe der Schlaufe ein vorgegebenes Ausmaß übersteigt und der Fühlhebel (7) über einen vorgegebenen Winkel hinaus nach unten verschwenkt ist.

11. Vorrichtung nach einem der Ansprüche 1 bis 10, dadurch gekennzeichnet, daß dem im Kanal (10) vorgesehenen, quer zu seiner Längserstreckung verlaufenden Schlitz ein Faltblech (40) zugeordnet ist, das quer zur Längserstreckung des Kanals (10) durch den Schlitz schiebbar ist, und daß dem Faltblech (40) eine Vorrichtung zum Aufleen (24) jeweils einer einzutaschenden Platte auf das Faltblech (40) zugeordnet ist.

12. Vorrichtung nach Anspruch 11, dadurch gekennzeichnet, daß zur Betätigung des Faltbleches (40) ein Kurbeltrieb (41) vorgesehen ist, der mit dem Faltblech (40) über eine Pleuelstange gekuppelt ist.

13. Vorrichtung nach Anspruch 12, dadurch gekennzeichnet, daß die Pleuelstange einen Pneumatikzylinder (42) aufweist, der wahlweise mit Druckmedium derart beaufschlagbar ist, daß die Länge der Pleuelstange beim Hub des Kurbeltriebes (41) zum Ausführen eines Falthubes des Faltbleches (40) unveränderbar und wahlweise derart mit Druckmedium beaufschlagbar ist, daß sich beim Hub des Kurbeltriebes (41) die Länge des Pneumatikzylinders (42) verkürzt, so daß das Faltblech (40) trotz Hub des Kurbeltriebes (41) keinen Falthub ausführt.

14. Vorrichtung nach Anspruch 13, dadurch gekennzeichnet, daß die Pleuelstange eine durch den Pneumatikzylinder (42) gehende Kolbenstange ist.

15. Vorrichtung nach einem der Ansprüche 11 bis 14, dadurch gekennzeichnet, daß mit dem Kurbeltrieb (41) eine Nockenscheibe (18) gekuppelt ist, durch die über ein Gestänge (16) die im Bereich des unteren Endes des Kanals (10) angeordnete, frei drehbare Rolle (15) während eines Falthubes des Faltbleches (40) vom im Kanal (10) aufgenommenen Separatorbandstück abhebbar ist.

16. Vorrichtung nach Anspruch 15, dadurch gekennzeichnet, daß im Gestänge (16), das zum Ausschwenken der Rolle (15) vorgesehen ist, ein Pneumatikzylinder (17) vorgesehen ist, der zwecks Kompensation des Hubes der Nockenscheibe (18) mit Druckmedium beaufschlagbar ist — oder — nicht mit Druckmedium beaufschlagt ist, so daß die Rolle (15) vom Separatorbandstück im Kanal (10) nicht abgehoben wird.

17. Vorrichtung nach einem der Ansprüche 1 bis 16, bei der eine Einrichtung (26) zum Verschweißen der Ränder der Separatorbandstücke, die um eine Platte herumgefaltet sind, vorgesehen ist, die von unten nach oben anhebbare Ambosse (27) aufweist, dadurch gekennzeichnet, daß zur Betätigung der Ambosse (27) eine Nockenscheibe (29) vorgesehen ist, und daß die Ambosse (27) über eine pneumatische Feder (28) mit der auf der Nockenscheibe (29) ablaufenden Hubrolle gekuppelt sind.

18. Vorrichtung nach Anspruch 17, dadurch gekennzeichnet, daß der Druck in der pneumatischen Feder (28) veränderbar ist.

19. Vorrichtung nach einem der Ansprüche 1 bis 18, mit einem nach der Schweißeinrichtung (26) angeordneten Förderer (32), der vorzugsweise als Endlosförderer ausgebildet ist, dadurch gekennzeichnet, daß im Bereich des der Schweißeinrichtung (26) benachbarten Endes des Förderers (32) eine Vorrichtung (30) zum Herausziehen von eingetaschten Platten aus der Schweißeinrichtung (26) vorgesehen ist, die in Richtung des Förderers (32) hin- und herbewegbar ist.

20. Vorrichtung nach Anspruch 19, dadurch gekennzeichnet, daß die Vorrichtung (30) zum Herausziehen von eingetaschten Platten aus der Schweißeinrichtung (26) zwei in Beuegungsrichtung im Abstand voneinander angeordnete Klemmbackenpaare (43 und 44) aufweist.

21. Vorrichtung nach Anspruch 20, dadurch gekennzeichnet, daß das der Schweißeinrichtung (26) benachbarte Klemmbackenpaar (43) der Vorrichtung (30) zum Herausziehen von eingetaschten Platten aus der Schweißeinrichtung (26) eine eingetaschte Platte aus der Schweißeinrichtung (26) in eine Wartestellung zieht, von wo aus die eingetaschte Platte vom zweiten Klemmbackenpaar (44) weiter in Richtung zum Förderer (32) bewegt wird.

22. Vorrichtung nach einem der Ansprüche 19 bis 21, dadurch gekennzeichnet, daß die Vorrichtung (30) zum Herausziehen von eingetaschten Platten aus der Schweißeinrichtung (26) ein auf Führungsschienen geführter Schlitten ist, an dem ein Anschlag, z.B. ein Haken zum Aufschieben einer eingetaschten Platte auf den Förderer (32) vorgesehen ist.

23. Vorrichtung nach einem der Ansprüche 19 bis 22, dadurch gekennzeichnet, daß das von der Schweißeinrichtung (26) entfernt angeordnete Klemmbackenpaar (44) am Ende eines Arbeitshubes der Vorrichtung (30) zum Herausziehen von eingetaschten Platten aus der Schweißeinrichtung (26) über dem aufgabeseitigen Ende des Förderbandes (32) angeordnet ist.

24. Vorrichtung nach einem der Ansprüche 19 bis 23, dadurch gekennzeichnet, daß der Förderer (32) durch zwei endlose Rollenketten gebildet ist.

25. Vorrichtung nach einem der Ansprüche 19 bis 24, dadurch gekennzeichnet, daß der Förderer (32) nach außen weisende Mitnehmer aufweist, daß ein nach der Schweißvorrichtung (26) dem Förderer (32) zugeordneter Plattenleger (31) Platten von Akkumulatoren auf Ablageleisten (45) ablegt, die im Abstand über dem Förderer (32) angeordnet sind, und daß die Höhe der Mitnehmer so bemessen ist, daß sie eine auf den Ablageleisten (45) abgelegte Platte erfassen und mitnehmen.

26. Vorrichtung nach einem der Ansprüche 19 bis 25, mit einer Abstapelvorrichtung (33) am abgabeseitigen Ende des Förderer (32), dadurch gekennzeichnet, daß eine an sich bekannte Vorrichtung (33) mit Drehscheiben zum Umsetzen und Übereinanderstapeln von Platten und eingetaschten Platten vorgesehen ist.

27. Vorrichtung nach Anspruch 26, dadurch gekennzeichnet, daß im abgabeseitigen Bereich der Abstapelvorrichtung (33) ein Sammelrost (35) vorgesehen ist, auf dem Plattenstapel gebildet werden, daß die Plattenstapel durch eine Ausziehvorrichtung (34) auf ein weiteres Transportband (38) verschiebbar sind, und daß dem Anfang des Förderbandes (38) ein Endplattenleger (37) zugeordnet ist.

28. Vorrichtung nach Anspruch 27, dadurch gekennzeichnet, daß im Bereich des Endplattenlegers (37) auf dem Förderband (38) Leisten (36) vorgesehen sind, die aus einer Lage, in der sie über dem Förderband (38) angeordnet sind, in eine Lage, in der sie neben dem Förderband (38) angeordnet sind und umgekehrt, verstellbar sind.

**Claims**

1. A device for pocketing positive or negative plates for accumulators in separators, with a device for drawing separator strip from a reel (1), with a vertically-extending straight duct (10) into which the separator strip (6) drawn from the reel (1) is introduced, with a device (23) for cutting pieces from the separator strip (6), and with a slot extending in the duct (10) transversely to its longitudinal extension and through which an accumulator plate to be pocketed can be pushed, folding and pushing out the piece of separator strip, characterised in that the vertical duct (10) for the separator strip (6) is closed at its lower end by a stop (20), that there is provided in the lower region of the duct (10) a signal emitter (21) detecting the presence of separator strip (6) in the duct (10), that there are provided in the region of the vertically-directed duct (10) rollers (11, 12 ; 14, 15) which can be applied against the separator strip (6) taken into the duct (10), for further transport of separator strip (6) in duct (10), and that the device (23) for cutting off pieces of separator strip is activated by the separator strip (6), as soon as the forward end of the separator strip (6) located in the duct (10) has reached the stop (20) at the lower end of the duct (10).

2. A device according to Claim 1, characterised in that the device (23) for cutting off pieces of separator strip (6) and the stop (20) at the lower end of the duct (10) are displaceable in the direction of the longitudinal extension of the duct (10) by a cut length adjustment device (25) for setting the length of the piece to be cut from the separator strip (6).

3. A device according to Claim 1 or 2, characterised in that the rollers (11, 12 ; 14, 15) which can be applied in the region of the vertically-directed duct (10) against the separator strip (6) located in the duct (10) are provided in pairs in order further to transport the separator strip (6) in the duct (10), and can be applied from both sides against the separator strip (6) located in the duct (10).

4. A device according to Claim 3, characterised in that, of each pair of rollers (11, 12 ; 14, 15) one roller (11 ; 14) is driven, and the second roller (12, 15) is preferably non-driven and freely movable rotationally, and out of engagement with the separator strip (6) in duct (10).

5. A device according to one of Claims 1 to 4, characterised in that the stop (20) provided at the lower end of the duct (10) for the separator strip (6) may be moved, particularly pivoted, out of the region of the duct (10), and that, in the region preferably above of the cutting device (23) associated with the duct (10), there is disposed a sensor (19) for detecting a dye mark applied to the separator strip (6) and indicating a faulty point in the latter.

6. A device according to one of Claims 1 to 5, characterised in that the cutting device (23) is mounted to pivot in the machine frame, and is pivotable by a cam wheel (22) in order to execute a cutting stroke, and that the cutting device (23) is stressed towards its inoperative position by a traction spring.

7. A device according to one of Claims 1 to 6, characterised in that the device for drawing separator strip (6) from the reel (1) has a conveyor roller (3), against which a press roller (4) can be applied, the separator strip (6) being passed between the conveyor roller (3) and the press roller (4), and that the application of the press roller (4) is controlled in dependence on the magnitude of a loop of separator strip (6) formed after the conveyor roller (3).

8. A device according to Claim 7, characterised in that, in order to determine the size of the loop which is provided between the conveyor roller (3) and a further turning roller (8) for the separator strip (6), and preferably disposed at the beginning of the duct (10), there is provided a sensor lever (7), pivotable around an axis rigidly disposed on the machine frame, said lever (7) bearing from the inside on the loop.

9. A device according to Claim 8, characterised in that there is associated with the sensor lever (7) a measuring transducer, for example an inductive circuit, detecting the position of said lever (7).

10. A device according to Claim 9, characterised in that the measuring transducer controls a pressure medium cylinder (5) acting on the press-roller (4), preferably on a frame carrying said roller (4), in such a way that the press roller (4) is raised from the separator strip (6) running over the turning roller (8), when the size of the loop exceeds predetermined dimensions, and the sensor lever (7) is pivoted through a predetermined angle outwards and downwards.

11. A device according to one of Claims 1 to 10, characterised in that there is associated with the slot provided in the duct (10) and extending transversely to its longitudinal extension, a folding plate (40) which may be pushed transversely to the longitudinal extension of the duct (10) through the slot, and that there is associated with the folding plate (40) a device (24) for laying a respective plate for pocketing on to the folding plate (40).

12. A device according to Claim 11, characterised in that there is provided, in order to activate the folding plate (40), a crank drive (41) which is coupled to the folding plate (40) by a connecting rod.

13. A device according to Claim 12, characterised in that the connecting rod has a pneumatic cylinder (42) which may be selectably charged with pressure medium in such a way that the length of the connecting rod is unalterable during the stroke of the crank drive (41) for executing a folding stroke of the folding plate (40), and may be selectably charged with pressure medium in such a way that during the stroke of the crank drive (41) the length of the pneumatic cylinder (42) is reduced, so that the folding plate (40) does not execute a folding stroke, despite the stroke of the crank drive (41).

14. A device according to Claim 13, characterised in that the connecting rod is a piston rod passing through the pneumatic cylinder (42).

15. A device according to one of Claims 11 to 14, characterised in that there is coupled to the crank drive (41) a cam wheel (18), by means of which, via a linkage (16), the freely-rotatable roller (15) disposed at the lower region of the duct (10) may be raised during a folding stroke of the folding plate (40) from the piece of separator strip (6) located in the duct (10).

16. A device according to Claim 15, characterised in that there is provided, in the linkage (16) serving to pivot the roller (15) outwards, a pneumatic cylinder (17) which, for purposes of compensation of the stroke of the cam wheel (18) may be charged with pressure medium — or is not charged with pressure medium — so that the roller (15) is not raised from the piece of separator strip in the duct (10).

17. A device according to one of Claims 1 to 16, in which there is provided an arrangement (26) for welding the edges of the pieces of separator strip folded around a plate, said arrangement (26) having anvils (27) which may be raised from below upwards, characterised in that, in order to activate the anvils (27) a cam wheel (29) is provided, and that the anvils (27) are coupled by a pneumatic spring (28) to the lifting roller running on the cam wheel (29).

18. A device according to Claim 17, characterised in that the pressure in the pneumatic spring (28) is alterable.

19. A device according to one of Claims 1 to 18, with a conveyor (32) disposed after the welding device, and which is preferably in the form of an endless conveyor, characterised in that there is provided in the region of the end of the conveyor adjacent to the welding device (26) a device (30) for withdrawing pocketed plates from the welding device (26), said device (30) being movable to and fro in the direction of the conveyor (32).

20. A device according to Claim 19, characterised in that the device (30) for withdrawing pocketed plates from the welding device (26) has two pairs of clamp jaws (43 and 44) spaced apart from each other in the direction of movement.

21. A device according to Claim 20, characterised in that the pair of clamp jaws (43) adjacent to the welding device (26) of the device (30) for withdrawing pocketed plates from the welding device (26) pulls a pocketed plate out of the welding device (26) into a waiting position, from which point the pocketed plate is moved by the second pair of clamp jaws (44) further in the direction of the conveyor (32).

22. A device according to one of Claims 19 to 21, characterised in that the device (30) for withdrawing pocketed plates from the welding device (26) is a slide guided on guide rails, on which there is provided a stop, e.g. a hook for pushing a pocketed plate on to the conveyor (32).

23. A device according to one of Claims 19 to 22, characterised in that the pair of clamp jaws (44) disposed more remotely from the welding device (26) is disposed, at the end of a working stroke of the device (30) for withdrawing pocketed plates from the welding device (26), above the input end of the conveyor belt (32).

24. A device according to one of Claims 19 to 23, characterised in that the conveyor (32) is in the form of two endless roller chains.

25. A device according to one of Claims 19 to 24, characterised in that the conveyor (32) has outwardly-pointing entrainment means, that a plate-layer (31) associated with the conveyor (32) after the welding device (26) deposits accumulator plates on deposit strips (45) which are disposed at a spacing above the conveyor (32), and that the height of the entrainment means is so selected that they grasp and carry away a plate laid on the deposit strips (45).

26. A device according to one of Claims 19 to 25, with a stacking device (33) at the output end of the conveyor (32), characterised in that there is provided a device (33) known per se with spindles for turning over and stacking on top of one another the plates and pocketed plates.

27. A device according to Claim 26, characterised in that there is provided in the output region of the stacking device (33) a collecting grid (35), upon which stacks of plates are formed, that the stacks of plates are displaceable by means of a withdrawal device (34) on to a further conveyor belt (38), and that there is associated with the beginning of the conveyor belt (38) and end-plate layer (37).

28. A device according to Claim 27, characterised in that there are provided in the region of the end-plate layer (37) on the conveyor belt (38) strips (36) which are displaceable out of a position in which they are disposed above the conveyor belt (38) into a position in which they are disposed next to the conveyor belt (38) and vice versa.

**Revendications**

1. Dispositif d'enveloppement de plaques d'accumulateur positives ou négatives dans des séparateurs, comprenant un dispositif de dévidage de bande de séparateur d'une bobine d'alimentation (1), un canal (10) rectiligne vertical dans lequel est introduite la bande de séparateur (6) dévidée de la bobine d'alimentation (1), un dispositif (23) pour découper des portions dans la bande de séparateur (6), et une fente qui s'étend dans le canal (10), perpendiculairement à la longueur de celui-ci, et à travers laquelle peut être glissée une plaque d'accumulateur à envelopper, en pliant et en poussant vers l'extérieur la portion de bande de séparateur, caractérisé par le fait que le canal (10) vertical pour la bande de séparateur (6) est fermé à son extrémité inférieure par une butée (20), que dans la zone inférieure du canal (10) il est prévu un capteur (21) détectant la présence de bande de séparateur (6) dans le canal (10), que dans la zone du canal (10) vertical sont prévus des rouleaux (11, 12 ; 14, 15) pouvant être appliqués contre la bande de séparateur (6) introduite dans le canal (10) et destinés au transport de la bande de séparateur (6) dans le canal (10), et que le dispositif (23) pour découper des portions dans la bande de séparateur (6) est actionné dès que l'extrémité avant de la bande de séparateur (6), se trouvant dans le canal (10), a atteint la butée (20) située à l'extrémité intérieure du canal (10).

2. Dispositif selon la revendication 1, caractérisé par le fait que le dispositif (23) pour découper des portions dans la bande de séparateur (6) et la butée (20) à l'extrémité inférieure du canal (10) peuvent être déplacés dans la direction longitudinale du canal (10) par un dispositif (25) de réglage de longueur de découpe servant à régler la longueur de la portion à découper dans la bande de séparateur (6).

3. Dispositif selon la revendication 1 ou 2, caractérisé par le fait que les rouleaux (11, 12 ; 14, 15) pouvant être appliqués contre la bande de séparateur (6) introduite dans le canal (10), dans la zone du canal (10) vertical, pour le transport de la bande de séparateur (6) dans le canal (10) sont prévus par paires et peuvent être appliqués des deux côtés contre la bande de séparateur (6) introduite dans le canal (10).

4. Dispositif selon la revendication 3, caractérisé par le fait que dans chaque paire de rouleaux (11, 12 ; 14, 15) un rouleau (11, 14) est entraîné et le deuxième rouleau (12, 15) n'est de préférence pas entraîné, est mobile en rotation et peut être déplacé sans être en contact avec la bande de séparateur (6) dans le canal (10).

5. Dispositif selon l'une des revendications 1 à 4, caractérisé par le fait que le butée (20) prévue à l'extrémité inférieure du canal (10) vertical pour la bande de séparateur (6) peut être déplacée hors de la zone du canal (10), notamment par pivotement, et que dans la zone du dispositif de coupe (23) associé au canal (10) il est prévu, de préférence au-dessus dudit dispositif, un détecteur (19) pour détecter une marque de couleur disposée sur la bande de séparateur (6) et indiquant un défaut de celle-ci.

6. Dispositif selon l'une des revendications 1 à 5, caractérisé par le fait que le dispositif de coupe (23) est monté pivotant dans le bâti de la machine et peut être pivoté par un disque à came (22) en vue d'exécuter une course de coupe, et que le dispositif de coupe (23) est sollicité par un ressort de traction en direction de sa position de repos.

7. Dispositif selon l'une des revendications 1 à 6, caractérisé par le fait que le dispositif pour dévider la bande de séparateur (6) de la bobine d'alimentation (1) présente un rouleau transporteur (3) contre lequel peut être appliqué un cylindre de pression (4), la bande de séparateur (6) passant entre le rouleau transporteur (3) et le cylindre de pression (4), et que l'application du cylindre de pression (4) est commandée en fonction de la longueur d'une boucle de bande de séparateur (6), formée en aval du rouleau transporteur (3).

8. Dispositif selon la revendication 7, caractérisé par le fait que, pour déterminer la longueur de la boucle qui est prévue entre le rouleau transporteur (3) et un rouleau de déviation (8) supplémentaire pour la bande de séparateur (6), disposé de préférence au début du canal (10), il est prévu un levier tâteur (7) susceptible d'être pivoté autour d'un axe solidaire du bâti et appliqué de l'intérieur contre la boucle.

9. Dispositif selon la revendication 8, caractérisé par le fait qu'il est associé au levier tâteur (7) un convertisseur de mesure, par exemple un commutateur inductif, détectant la position dudit levier.

10. Dispositif selon la revendication 9, caractérisé par le fait que le convertisseur de mesure commande un vérin (5) à fluide sous pression, agissant sur le cylindre de pression (4), notamment sur un bâti portant ledit cylindre, de manière telle que le cylindre de pression (4) soit soulevé de la bande de séparateur (6) passant sur le rouleau de déviation (8), lorsque la longueur de la boucle dépasse une valeur prédéterminée et le levier tâteur (7) est pivoté vers le bas au-delà d'un angle prédéterminé.

11. Dispositif selon l'une des revendications 1 à 10, caractérisé par le fait qu'il est associé à la fente prévue dans le canal (10) et perpendiculaire à la longueur de celui-ci, une tôle de pliage (40) qui peut être glissée à travers la fente, perpendiculairement à la longueur du canal (10), et qu'il est associé à la tôle de pliage (40) un dispositif (24) pour déposer chaque fois une plaque à envelopper sur la tôle de pliage (40).

12. Dispositif selon la revendication 11, caractérisé par le fait que pour l'actionnement de la tôle de pliage (40), il est prévu un mécanisme à manivelle (41) qui est accouplé à la tôle de pliage (40) par une bielle.

13. Dispositif selon la revendication 12, caractérisé par le fait que la bielle présente un vérin pneumatique (42) qui peut être activé de façon sélective par un fluide sous pression, de manière à ce que la longueur de la bielle ne soit pas modifiée pendant la course du mécanisme à manivelle (41) pour exécuter une course de pliage de la tôle de pliage (40), et peut être activé de façon sélective par un fluide sous pression, de manière à ce que pendant la course du mécanisme à manivelle (41), la longueur du vérin pneumatique (42) soit raccourcie, de sorte que la tôle de pliage (40) n'effectue pas de course de pliage, en dépit de la course du mécanisme à manivelle (41).

14. Dispositif selon la revendication 13, caractérisé par le fait que la bielle est une tige de piston traversant le vérin pneumatique (42).

15. Dispositif selon l'une des revendications 11 à 14, caractérisé par le fait qu'il est accouplé au mécanisme à manivelle (41) un disque à came (18) qui permet, par l'intermédiaire d'un système de tringles (16), de soulever le rouleau (15) libre en rotation, disposé dans la zone de l'extrémité inférieure du canal (10), de la portion de bande de séparateur se trouvant dans le canal (10), pendant une course de pliage de la tôle de pliage (40).

16. Dispositif selon la revendication 15, caractérisé par le fait qu'il est prévu dans le système de tringles (16) destiné au pivotement du rouleau (15), un vérin pneumatique (17) qui peut être activé — ou non — avec un fluide sous pression en vue de compenser la course du disque à came (18), de manière que le rouleau (15) ne soit pas soulevé de la portion de bande de séparateur se trouvant dans le canal (10).

17. Dispositif selon l'une des revendications 1 à 16, dans lequel il est prévu un dispositif (26) pour souder les bords des portions de bande de séparateur pliées autour d'une plaque, dispositif qui présente des enclumes (27) pouvant être soulevés de bas en haut, caractérisé par le fait que pour l'actionnenent des enclumes (27) il est prévu un disque à came (29), et que les enclumes (27) sont accouplées par un ressort pneumatique (28) au rouleau de levage roulant sur le disque à came (29).

18. Dispositif selon la revendication 17, caractérisé par le fait que la pression dans le ressort pneumatique (28) peut être modifiée.

19. Dispositif selon l'une des revendications 1 à 18, comprenant un convoyeur (32) qui est disposé en aval du dispositif de soudage (26) et est de préférence réalisé sous la forme d'un convoyeur sans fin, caractérisé par le fait que dans la zone de l'extrémité du convoyeur (32) adjacente au dispositif de soudage (26) il est prévu un dispositif (30) destiné à extraire les plaques enveloppées hors du dispositif de soudage (26) et pouvant être déplacé dans un mouvement de va-et-vient en direction du convoyeur (32).

20. Dispositif selon la revendication 19, caractérisé par le fait que le dispositif (30) d'extraction des plaques enveloppées hors du dispositif de soudage (26) présente deux paires de mâchoires de serrage (43 et 44) disposées à distance l'une de l'autre dans la direction de déplacement.

21. Dispositif selon la revendication 20, caractérisé par le fait que la paire (43) de mâchoires de serrage, adjacente au dispositif de soudage (26), du dispositif (30) d'extraction de plaques enveloppées hors du dispositif de soudage (26) extrait une plaque enveloppée hors du dispositif de soudage (26) et l'amène dans une position d'attente à partir de laquelle la plaque enveloppée est transportée par la deuxième paire (44) de mâchoires de serrage en direction du convoyeur (32).

22. Dispositif selon l'une des revendications 19 à 21, caractérisé par le fait que le dispositif (30) d'extraction de plaques enveloppées hors du dispositif de soudage (26) est un chariot guidé sur des rails de guidage et muni d'une butée, par exemple d'un crochet, pour glisser une plaque enveloppée sur le convoyeur (32).

23. Dispositif selon l'une des revendications 19 à 22, caractérisé par le fait qu'à la fin d'une course de travail du dispositif (30) d'extraction de plaques enveloppées hors du dispositif de soudage (26), la paire (44) de mâchoires de serrage plus éloignée du dispositif de soudage (26) est disposée au-dessus de l'extrémité côté chargement du convoyeur (32).

24. Dispositif selon l'une des revendications 19 à 23, caractérisé par le fait que le convoyeur (32) est constitué de deux chaînes à rouleaux sans fin.

25. Dispositif selon l'une des revendications 19 à 24, caractérisé par le fait que le convoyeur (32) présente des entraîneurs orientés vers l'extérieur, qu'un dispositif (31) de dépôt de plaques, associé au convoyeur (32) en aval du dispositif de soudage (26), dépose des plaques d'accumulateur sur des barres de dépôt (45) disposées à distance au-dessus du convoyeur (32), et que la hauteur des entraîneurs est dimensionnée telle qu'ils saisissent et entraînent une plaque déposée sur les barres de dépôt (45).

26. Dispositif selon l'une des revendications 19 à 25, comprenant un dispositif d'empilage (33) côté déchargement du convoyeur (32), caractérisé par le fait qu'il est prévu un dispositif (33) connu en soi, comprenant des plateaux tournants pour transférer et empiler des plaques et des plaques enveloppées.

27. Dispositif selon la revendication 26, caractérisé par le fait que dans la zone côté déchargement du dispositif d'empilage (33) il est prévu une grille de rassemblement (35) sur laquelle sont formées des piles de plaques, que les piles de plaques peuvent être glissées par un dispositif de prélèvement (34) sur un autre convoyeur (38), et qu'un dispositif (37) de dépôt de plaque final est associé au début du convoyeur (38).

28. Dispositif selon la revendication 27, caractérisé par le fait que dans la zone du dispositif (37) de dépôt de plaque final, des barres (36) sont prévues sur le convoyeur (38), qui peuvent être déplacées à partir d'une position dans laquelle elles se trouvent au-dessus du convoyeur (38) à une position dans laquelle elles se trouvent à côté du convoyeur (38), et vice versa.